# EUROPEAN PATENT APPLICATION

(11) **EP 1 959 351 A2**
(43) Date of publication of application: **20.08.2008**
(21) Application number: 08000182.9
(22) Date of filing: 07.01.2008
(51) Int. Cl.: G06F 17/21, G06F 17/24

(54) **Print data processing device and recording medium**

(30) Priority: 17.01.2007 JP 2007007785
(71) Applicant: Canon Finetech Inc., Ibaraki 303-8503 (JP)
(72) Inventor: Yumoto, Chiharu, Joso-shi Ibaraki 303-8503 (JP); Ueda, Kenji, Joso-shi Ibaraki 303-8503 (JP)
(74) Representative: Strehl Schübel-Hopf & Partner

(57) **Abstract**

When a plurality of sets of data items are stored in corresponding frames on respective pages for printing, a data processing device confirms the size of each frame and, for each page, confirms the size of data to be stored in each frame. In addition, a check is made if data of each of the plurality of data items overflows the corresponding frame. If an overflow is detected, a predetermined warning message is issued before performing a printing. When print data stored in a database is processed, one print page at a time, the processing described above allows a user identify a frame overflow of print data on any page before printing.

## Description

### DETAILED DESCRIPTION

### Field of the Invention

The present invention relates to a print data processing device and a recording medium which has recorded thereon a print data processing program for reading a content of a database and printing the content.

### Related Art

A conventional technology proposed for printing data on a preprinted form is that a form with preprinted frames, such as an application form, is read by a scanner mounted on the carriage of a printer, the print format is automatically set so that text can be printed in the frames detected from the image of the form, the entered text is displayed, and only the text is printed in the frames on the form with the print heads in response to a print instruction (see Japanese Patent Laid-Open Publication No. JP 1996-123790 A1).

On the other hand, instead of printing data on a form with preprinted frames such as an application form, necessary sets of data items are read sometimes from a database, in which a plurality of sets of data items are stored, for printing. In this case, the print frame for each data item is set in a predetermined position in a page, the print data of each data item is merged into the corresponding frame, and both the data and the frame are printed. This type of print is called merge printing. The merge printing of data acquired from a database is similar to the printing on a form with preprinted frames described above in that print data must fit in the frames. However, the merge printing has circumstances specific to a database. That is, because data with frames is printed, the print data processing device knows the frame positions and sizes and so does not have to scan the form.

In some cases, with respect to a specific data item stored in a database, relatively long character strings and short character strings are stored as text data for the specific data item. For example, the data item "address" contains a varying-length character string that represents an address. In general, the address of an urban area is composed of more characters than that of a local area. This means that, if the length of the print frame assigned to this data item is determined based on a relatively short character string, the print data of a longer character string is sometimes truncated at the end of the frame. Conversely, a frame that is too long is sometimes undesirable from the viewpoint of page layout because the frame occupies much space and makes the printed form look imbalanced.

When the content of a database containing a large number of sets of data items are printed on separate pages, one set of data items on each page, there is a possibility that a frame overflow, in which a part of text data overflows any of the frames, occurs on a specific page and it is difficult to detect this condition before printing. That is, checking the print result of all pages on the print preview screen requires much time and efforts and, especially when there are a lot of pages, doing so is unpractical.

Not only text data but also an image, a bar code, etc. have varying print size (length) and, therefore, could generate the same problem.

In view of the foregoing, it is an object of the present invention to provide a print data processing device and a recording medium recording a computer readable program that allow the user to recognize if a frame overflow occurs in print data on any given page before printing when the print data of database data is processed, one print page at a time.

### SUMMARY OF THE INVENTION

According to present invention, there is provided a print data processing device that processes print data, one print page at a time. The print data processing device comprises a database reading unit that reads a content of a database in which a plurality of sets of data items are stored; a layout unit that sets a frame in a desired position on a page and, at the same time, merges data, read from the database, into the frame; a print data generation unit that generates print data on a page basis based on a result acquired from the merge of the layout unit; a checking unit that, for each page, confirms a size of data to be stored in each frame and checks if the data will overflow the frame; and a warning unit that issues a predetermined warning before printing when an overflow is detected.

The print data processing device having this configuration confirms the size of data to be stored in each of the frames on a page before printing the content of a database, checks if the data will overflow the frame and, if an overflow is detected, issues a predetermined warning before printing.

According to another aspect of the present invention, there is provided a recording medium which has recorded thereon a print data processing program that processes print data generated by a data processing device. The program causes a computer to perform the steps of, when a plurality of sets of data items are stored in corresponding frames on respective pages for printing, confirming a size of each frame; confirming a size of data to be stored in each frame; checking if any data will overflow any one of the frames when the data is printed; and, if an overflow is detected, issuing a predetermined warning message before performing a printing.

The data is a character string, bar code data, image data, etc.

The warning message includes information identifying a page on which data that overflows the frame is present, to allow the user to identify on which page the frame overflow has occurred.

The warning message may include options for actions that a user can take. The options for actions include, for example, at least two of (1) Generating print data only in the frame, (2) Interrupting print processing, (3) Reducing data so that the data fits in the frame, and (4) Generating print data that exceeds the frame.

The present invention allows the user to confirm if there is data that will overflow a frame when data read from a database is printed and, if there is data that will overflow a frame, issues a warning to the user to prevent a print miss from occurring. This processing saves efforts of reprinting and avoids the waste of recording-paper and ink.

### BRIEF DESCRIPTION OF THE DRAWINGS

FIG. 1 is a diagram showing the general configuration of a print system according to the present invention.
FIG. 2 is a block diagram showing an example of the hardware configuration of a print system in an embodiment of the present invention.
FIG. 3 is a block diagram showing the functions executed by a PC in the embodiment of the present invention.
FIGS. 4A-4C are diagrams showing merge printing in the embodiment of the present invention.
FIG. 5 is a flowchart showing an example of processing of an application that performs merge printing in the embodiment of the present invention.
FIGS. 6A and 6B are diagrams showing a method for checking if merge characters overflow a merge frame in the embodiment of the present invention.
FIGS. 7A, 7B, 7C, and 7D are diagrams showing a print result when "Reduce the size of object to fit in print frame" in FIG. 6B is selected.
FIGS. 8A-8C are diagrams showing an example in which a bar code is printed by the merge printing in the embodiment of the present invention.
FIGS. 9A and 9B are diagrams showing a bar code and a bar width correspondence table used in the embodiment of the present invention.

### DETAILED DESCRIPTION OF THE EMBODIMENTS

Embodiments of the present invention will be described in detail below with reference to drawings.

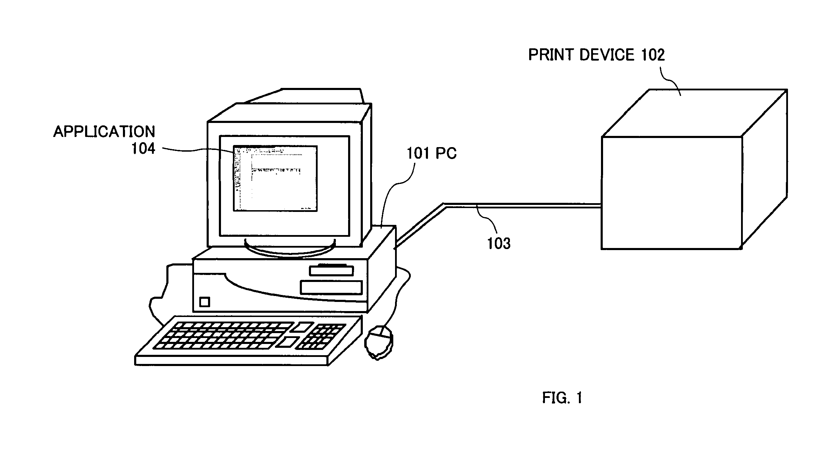

FIG. 1 is a diagram showing the general configuration of a print system of the present invention. This print system comprises a personal computer (PC) 101, which constitutes a print data processing device of the present invention, and a print device 102. The PC 101 is connected to the print device 102 via a communication interface 103. The communication interface 103 that can be used is a network cable, a USB cable, a wireless LAN or the like.

FIG. 1 shows the execution of an application 104 in which the PC 101 reads print data from a database, the content of the database is sequentially merged into the corresponding frames, and the data is printed. This application 104 generates merge data and sends it to the print device 102. The print device 102 receives the merge data and prints varying-length or varying-size data in the frames on the page.

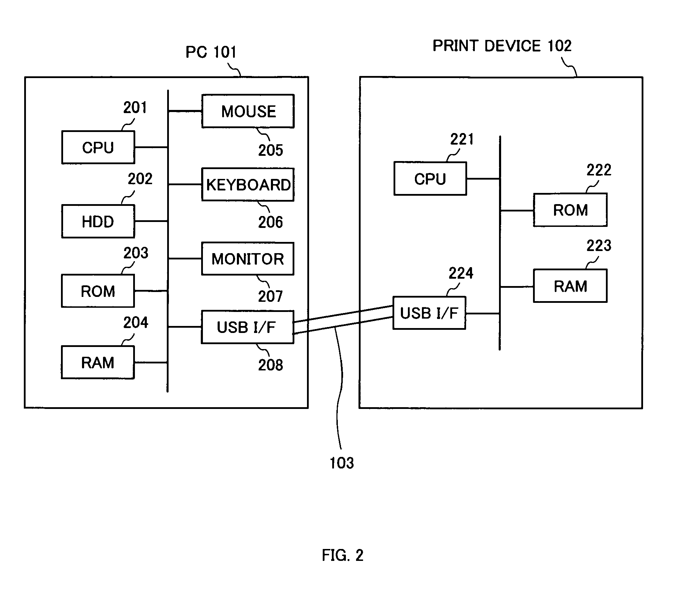

FIG. 2 is a block diagram showing an example of the hardware configuration of a print system in this embodiment.

The PC 101 comprises a central processing unit (CPU) 201, a hard disk drive (HDD) 202, a read only memory (ROM) 203, a random access memory (RAM) 204, a mouse 205, a keyboard 206, a monitor 207, and a universal serial bus interface (USB I/F) unit 208.

The CPU 201 is a central processing unit that performs control operations for the whole PC 101 under software control. The HDD 202 is a large-capacity external storage device in which programs and data are stored non-volatilely, and a database which will be described below is stored in this HDD 202. The ROM 203 is a memory in which the starter program of the CPU 201 and permanent data are stored non-volatilely. The ROM 203, usually a read-only memory, may include a rewritable memory such as a flash ROM. The RAM 204 is usually a volatile memory used for the work area or the temporary storage area of the CPU 201. The mouse 205 is one type of user-operated pointing devices. The keyboard 206 is an input device via which the user enters an instruction or data. The monitor 207, such as an LCD, a CRT or the like, is a display device on which information is displayed to the user. The USB I/F unit 208 constitutes the communication interface described above. An application that generates print data or a program such as a printer driver, etc. usually stored in the HDD 202, is read into the RAM 204 at execution time for execution. Programs may also be stored in the ROM 203.

The print device 102 comprises a CPU 221, a ROM 222, a RAM 223, a USB I/F unit 224, etc. The CPU 221 is a central processing unit that performs control operations for the whole print device 102 under software control. The ROM 222 is a memory in which programs executed by the CPU 221 for operating the print device or various types of permanent data are stored. The ROM 222, usually a read-only memory, may also include a rewritable memory such as a flash ROM. The RAM 223 is usually a volatile memory used for the work area or the temporary storage area of the CPU 221. The USB I/F unit 224, which constitutes the communication interface described above, is connected to the USB I/F unit 208 of the PC 101 via a USB cable.

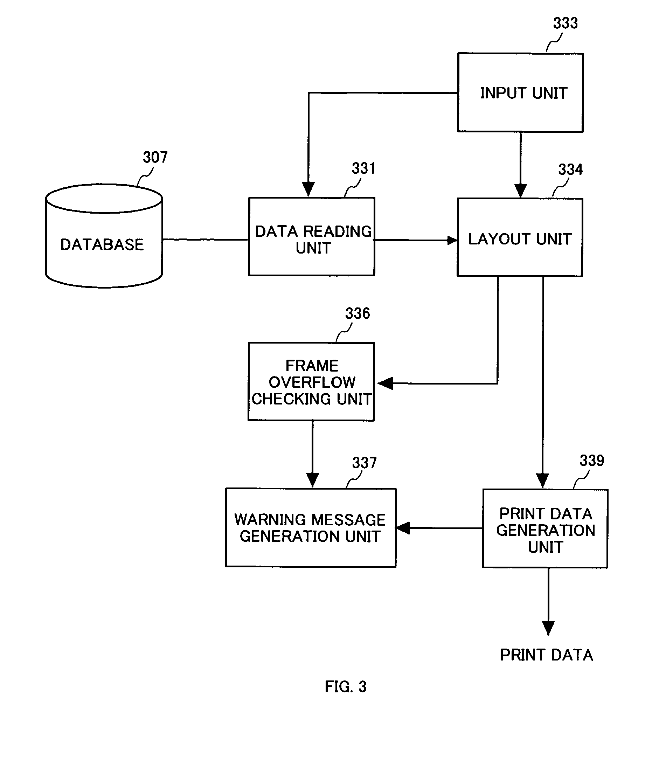

FIG. 3 is a block diagram showing the function executed by the PC in this embodiment. A data reading unit 331 reads necessary data from a database 307 and passes the data to a layout unit 334. The database 307 is created in a storage device such as the HDD 202. The layout unit 334 creates the layout of a page in which various frames are arranged and, at the same time, merges the corresponding data of a page, received from the data reading unit 331, into the corresponding frames on the page. A print data generation unit 339 generates the print data of each page, based on the layout information generated by the layout unit 334 and data assigned to the frames, and outputs the generated print data to the print device 102. An input unit 333, which is the keyboard 206 or the mouse 205, sends an instruction or data to the data reading unit 331 and the layout unit 334 in response to an instruction from the user. A frame overflow checking unit 336 checks if a "frame overflow" occurs, which is a condition that occurs when data overflows a frame, based on the size information on each frame received form the layout unit 334 and the data assigned to the frame. When a frame overflow occurs, the frame overflow checking unit 336 notifies a warning message generation unit 337 of the condition. In response to this notification, the warning message generation unit 337 generates a predetermined warning message to the user. In this example, the warning message generation unit 337 displays a warning message of predetermined text on the monitor 207. The CPU 201 executes the programs to control the processing of those units.

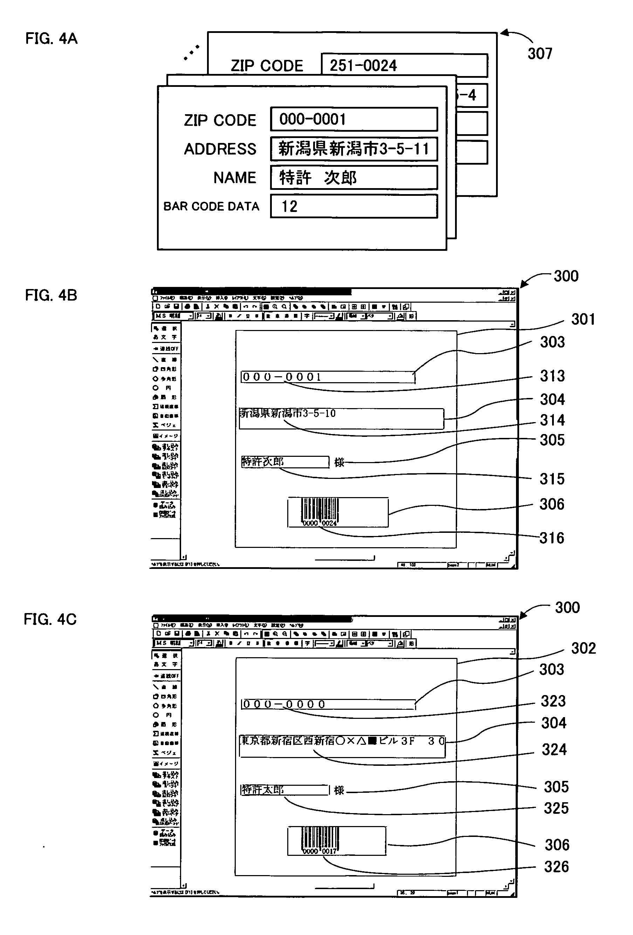

FIGS. 4A-4C are diagrams showing merge printing in this embodiment.

FIG. 4A is a diagram showing the general configuration of the database 307. Although this figure shows an example of an address book composed of cards, one card for each record (registrant), the format and the content of the database are not limited to those in this example.

The application 104 , which performs merge printing, displays a display screen (window) 300, reads the data of the specified items of a specified record from the database 307, and merges the data of the items into merge frames 303, 304, and 305 on pages 301 and 302 for generating print data. The output data of the database has one of file types CSV, XML, tab-delimited text, etc. The page 301 on the display screen 300 shown in FIG. 4B indicates the content of the first page, and the page 302 on display screen 300 shown in FIG. 4C indicates the content of the second page. Bar codes 316 and 326 are merged into a merge frame 306 on each page. Although only the first two pages are shown in this example, subsequent pages may follow.

The merge characters in each merge frame on the pages 301 and 302 are data acquired from the database 307, and a different set of data items is allocated to each page. The merge bar codes 316 and 326 are acquired also from the database 307 as bar code data, and a different bar code is generated for each page. The bar code type may be any one of JAN, ITF, EAN, Code39, Customer Bar Code, DataMatrix, QR Code, and so on (including two-dimensional codes).

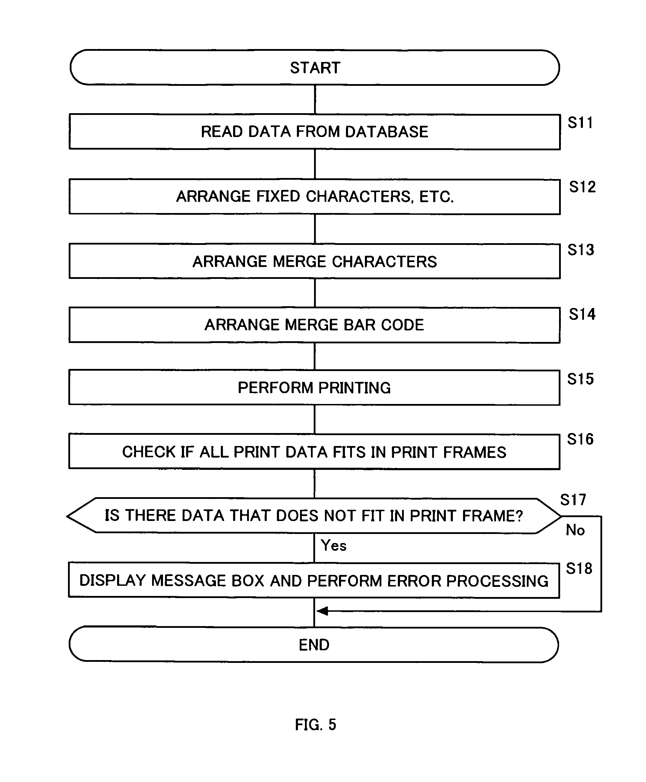

FIG. 5 is a flowchart showing an example of the processing of an application that performs the merge printing. The program that contains the execution procedure of this processing shown in the flowchart is stored in a storage device (for example, HDD 202), and the CPU 201 reads the program from the storage device into the RAM 204 for interpretation and execution to implement the processing. The steps of the processing correspond to the functions represented by the functional blocks shown in FIG. 3.

When the application is started, the CPU 201 first selects the database used for the merge printing and reads its content (S11). Next, if there are fixed objects (such as fixed characters or display frames) that are printed in the same format on any page, they are arranged on the page (S12) . Next, the merge characters are arranged (S13). If there is a merge bar code that will be printed, the merge bar code is arranged in the layout (S14).

After the arrangement is finished, the printing is performed (S15). When the printing is performed, predetermined data is read from the database and a check is made for all data to be printed if the data fits in the corresponding print frame (S16). If it is found as a result of this checking that there is data that does not fit in the print frame (Yes in S17), the message box is displayed and the error processing is performed (S18).

If all data to be printed fits in the print frames (No in S17), the printing is continued and the processing is terminated.

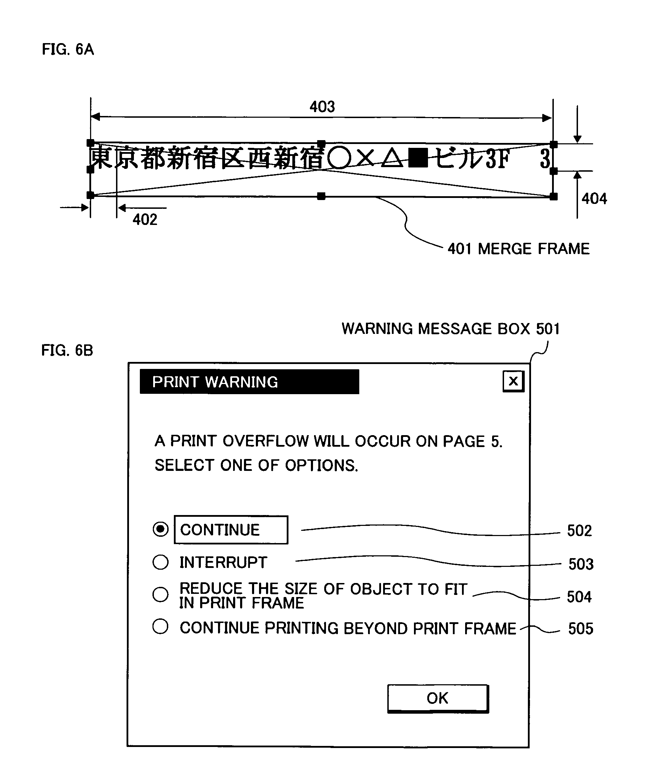

Next, with reference to FIGS. 6A and 6B, the following describes how the check is made if the merge characters overflow a merge frame 401. FIG. 6A shows the relation between a character string and the merge frame 401. When the merge frame 401 is set, the application acquires the frame size (number of pixels). In this example, the application acquires a merge character frame length 403 of the merge frame 401, a horizontal character size 402, and a vertical character size 404. In this embodiment, assume that the merge character frame length 403 is 1500 pixels, the vertical character size 404 of one character is 80 pixels, and the horizontal character size 402 is 80 pixels.

In FIG. 6A, there is shown an example in which the character string " 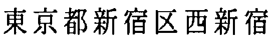 ○ × Δ ■ 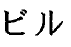 3 F 3 0 6 (o×Δ■ Building 3F 306, Nishi-Shinjuku, Shinjuku-ku, Tokyo) " is printed as a character string. Because the number of characters of this character string is 21, the difference between the horizontal frame size and the horizontal character string size is calculated as follows.

1500 pixels - (80 pixels × 21 characters) = -180 pixels

The calculation result indicates that the character string overflows the print frame horizontally. Note that no special processing is performed for the vertical direction because the size of a character string does not depend on the number of characters. However, when a vertically long frame is used and a merge character string is written vertically, the same processing should be performed for the vertical direction.

Also, it should be noted that although the example shows the Chinese/Japanese characters, the present invention could be applied to other characters, such as alphabet.

FIG. 6B shows an example of a message box 501 displayed when a character string does not fit in the print frame. In this example, the number of the page in which the object does not fit in the print frame is notified to the user and, at the same time, the user is prompted to select an option from a plurality of corrective actions. The options are as follows.
- Continue (502)
- Interrupt (503)
- Reduce the size of object to fit in print frame (504)
- Continue printing beyond print frame (505)

When the user selects "Continue (502)" from the options, the printing is performed with the characters outside the print frame lost. When the user selects "Interrupt (503)", the print processing is interrupted. When the user selects "Reduce the size of object to fit in print frame (504)", the character string is reduced in size so that the character string fits in the print frame and the character string is printed. When the user selects "Continue printing beyond print frame (505)", the printing is performed with a part of a character string printed beyond the frame if the character string does not fit in the print frame.

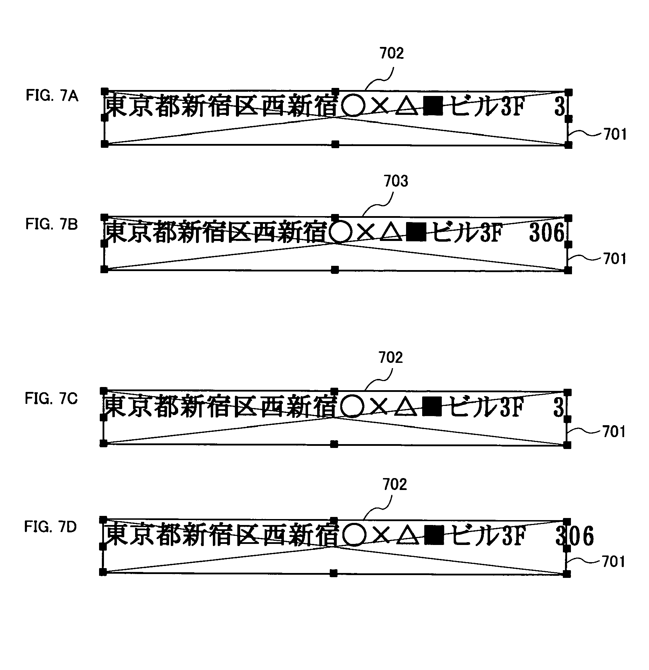

Next, FIGS. 7A and 7B show how a character string is printed in a print frame when the user selects "Reduce the size of object to fit in print frame (504)" shown in FIG. 6B. FIG. 7A shows that, when a character string 702 is set in a character frame 701 without reducing the size of the character string, some characters do not fit in the character frame (overflow the frame) because there are too many characters. FIG. 7B shows a character string 703, generated by horizontally reducing the size of the character string 702, so that the character string fits in the character frame 701.

FIG. 7C and 7D show how a character string is printed in a print frame when the user selects "Continue printing beyond print frame (505)" shown in FIG. 6B. As with FIG. 7A, FIG. 7C shows that, when the character string 702 is set in the character frame 701 without reducing the size of the character string, some characters do not fit in the character frame (overflow the frame) because there are too many characters. FIG. 7D shows that the character string 702 is printed with a part thereof beyond the character frame 701.

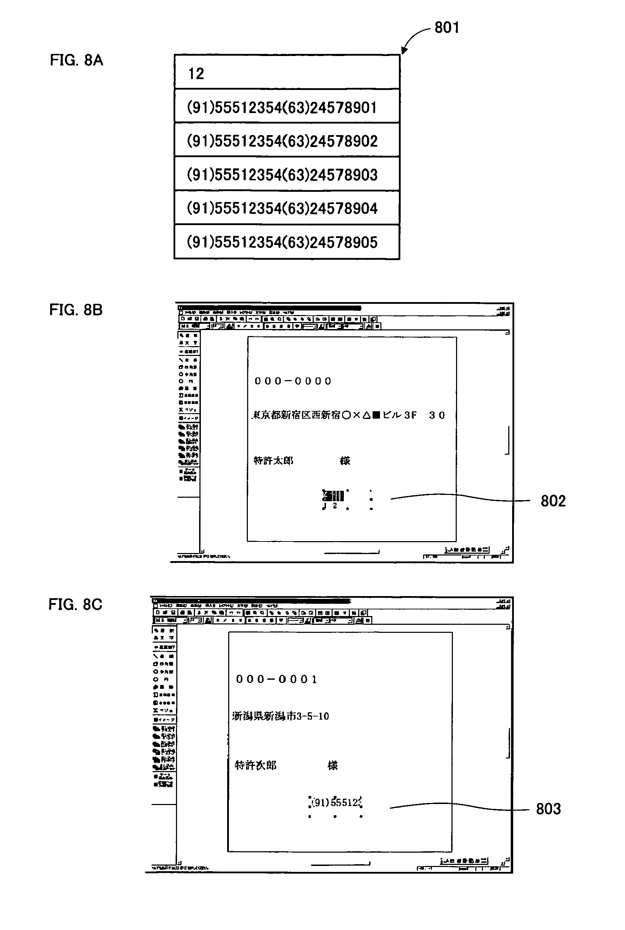

Next, the following describes how a bar code is printed by the merge printing with reference to FIGS. 8A- 8C .

Bar code data 801 shows only the bar code data of plural pages, stored in the database 307 in FIG. 4A, in the form of table for the sake of description. To generate bar code from the database 307, the system reads the bar code data, generates print bar code 802 as an image as shown in FIG. 8B, and prints the generated bar code. In this example, if the generated bar code does not fit in the given frame as shown in FIG. 8C, as many characters of bar code data 803 in the form of a character staring as possible are printed in the frame. The bar code type used in this embodiment is EAN-128. Because the bar code length is indeterminate in EAN-128, the bar code gets wider as the number of characters of the numeric value corresponding to a bar code is increased.

Because the numeric value acquired from the information stored in the database 307 is represented as a bar code representing two-digit number in the example in FIG. 8B, the bar code of the merge bar code 802, which is narrow in width, fits in the given frame.

On the other hand, the merge bar code 803 shown in FIG. 8C, which is wider in width, does not fit in the frame because the bar code data acquired from the information stored in the database 307 is a 24-digit number. Therefore, not the bar code, but the bar code data (i.e. numeric value string) is directly printed. When a bar code does not fit in the frame as in this example, a numeric value string, not a bar code, is embedded in the frame to indicate that the bar code does not fit in the frame. Even when printed, it is printed as a numeric string to prevent an incomplete bar code from being used intact.

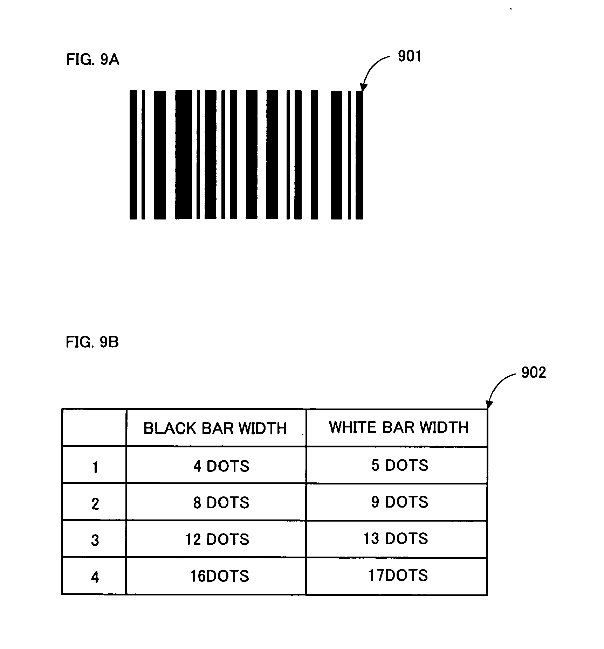

FIGS. 9A shows a bar code, and FIG. 9B shows a bar width correspondence table. As shown in FIG. 9A, a bar code 901 is composed of black bars and white bars. For example, in EAN-128, a bar code is composed of white bars and black bars each of which has four values represented by different number of dots.

As shown in a data table 902 in FIG. 9B, the number of dots for the black bar width and the white bar width are defined for each of four values. So, when the total value of the widths of bars constituting a bar code exceeds the frame size, a warning message is displayed to prompt the user to take a corrective action.

While the preferred embodiment of the present invention has been described, the present invention is not limited thereto and various changes and modification may be made.

## Claims

1. A print data processing device that processes print data, one print page at a time, comprising:
a database reading unit that reads a content of a database in which a plurality of sets of data items are stored;
a layout unit that sets a frame in a desired position on a page and, at the same time, merges data, read from said database, into the frame;
a print data generation unit that generates print data on a page basis based on a result acquired from the merge of said layout unit;
a checking unit that, for each page, confirms a size of data to be stored in each frame and checks if the data will overflow the frame; and
a warning unit that issues a predetermined warning when an overflow is detected.

2. The print data processing device according to claim 1 wherein the warning unit issues a warning message which includes information identifying a page on which data that overflows the frame is present.

3. The print data processing device according to claim 1 or 2 wherein the warning unit issues a warning message which includes options for actions that a user can select.

4. A recording medium which has recorded thereon a computer readable print data processing program that processes print data generated by a data processing device, said program implementing steps of:
when a plurality of sets of data items are stored in corresponding frames on respective pages for printing, confirming a size of each frame;
confirming a size of data to be stored in each frame;
checking if any data will overflow any one of the frames when the data is printed; and
if an overflow is detected, issuing a predetermined warning message before performing a printing.

5. The recording medium according to claim 4 wherein the warning message includes information identifying a page on which data that overflows the frame is present.

6. The recording medium according to claim 4 or 5 wherein the warning message includes options for actions that a user can select.

7. The device or recording medium according to claim 3 or 6 wherein the options for actions include at least two of (1) Generating print data only in the frame, (2) Interrupting print processing, (3) Reducing data or the size of data so that the data fits in the frame, and (4) Generating print data that exceeds the frame.

8. The device or recording medium according to any of claims 1 to 7 wherein the data is a character string.

9. The device or recording medium according to any of claims 1 to 7 wherein the data is bar code data.

10. The device or recording medium according to any of claims 1 to 7 wherein the data is image data.
